# EUROPÄISCHE PATENTSCHRIFT

(11) **EP 3 578 483 B1**
(45) Veröffentlichungstag und Bekanntmachung des Hinweises auf die Patenterteilung: **01.01.2025**
(21) Anmeldenummer: 19178399.2
(22) Anmeldetag: 05.06.2019
(51) Int. Cl.: B65G 29/00, B65G 47/86, B65G 47/90

(54) **VORRICHTUNG ZUM TRANSPORTIEREN VON BEHÄLTERN**
DEVICE FOR TRANSPORTING CONTAINERS
DISPOSITIF DE TRANSPORT DES RÉCIPIENTS

(30) Priorität: 05.06.2018 DE 102018113301
(43) Veröffentlichungstag der Anmeldung: 11.12.2019
(73) Patentinhaber: KRONES AG, 93073 Neutraubling (DE)
(72) Erfinder: Kolter, Nick, 93073 Neutraubling (DE)
(74) Vertreter: Nordmeyer, Philipp Werner

(56) Entgegenhaltungen:
- WO-A1-2005/080013
- CH-A5- 678 616
- CN-A- 107 116 075
- DE-A1- 10 017 050
- DE-A1- 102006 050 778
- DE-A1- 3 009 114

## Beschreibung

### Technisches Gebiet

Die vorliegende Erfindung betrifft eine Vorrichtung zum Transportieren von Behältern, insbesondere eine Vorrichtung zum Transportieren von Behältern in einer Getränkeabfüllanlage.

### Stand der Technik

Vorrichtungen zum Transportieren von Behältern in Getränkeabfüllanlagen sind an sich bekannt. Es wird bei diesen Transportvorrichtungen unter anderem zwischen solchen Vorrichtungen, bei denen der Behälter in seinem Bodenbereich auf einem Transporttisch aufsteht, und solchen Vorrichtungen, bei denen der Behälter im Halsbereich gehalten wird und hängend transportiert wird, unterschieden. Letzteres wird auch als "neck-handling" bezeichnet.

Die am Halsbereich gehaltenen Behälter werden mittels Klammern geführt, wobei die Klammern beispielsweise unter einem Halsring des Behälters angreifen. Die Klammern sind zum Halten von Behältern einer bestimmten Behältergröße beziehungsweise von bestimmten Halsdimensionen ausgebildet. Sollen mit einer Transportvorrichtung Behälter einer anderen Behältergröße transportiert werden, so sind deren Klammern auszutauschen. Durch dieses Umrüsten entstehen Stillstandzeiten. Zudem bedingt das Umrüsten einen Eingriff von außen. Insbesondere bei Aseptikanlangen erfordert ein solcher Eingriff von außen eine nachfolgende Sterilisation, um die Betriebsbereitschaft wieder herzustellen.

In Getränkeabfüllanlagen ist es fernerhin bekannt, eine Abfolge von nacheinander geschalteten Karussellen beziehungsweise Transportsternen vorzusehen, welche die jeweiligen Behandlungsschritte an den zu befüllenden Behältern vornehmen beziehungsweise welche ein Überführen der jeweiligen Behälter von einem Behandlungskarussell zu einem nächsten Behandlungskarussell ermöglichen.

Die Sterne beziehungsweise Karusselle zum Transportieren der Behälter können dabei entsprechend entweder solche sein, an welchen eine tatsächliche Behandlung der Behälter vorgenommen wird, oder aber solche, welche lediglich zum Transportieren der Behälter von einem Behandlungskarussell zu einem nächsten vorgesehen sind.

Wie bereits oben erwähnt, sind herkömmliche Vorrichtungen zum Transportieren von Behältern zum Transport von Behältern eines bestimmten Typs ausgebildet beziehungsweise optimiert. Wenn in einer Getränkeabfüllanlage verschiedene Behältertypen beziehungsweise Behälter verschiedener Größe transportiert werden sollen, so ist entweder ein Umrüsten erforderlich, oder die Klammern sind kompliziert aufzubauen und aufwendig anzusteuern, um ein Greifen von Behältern verschiedener Größe zu ermöglichen. Die Einstellbarkeit diesbezüglich ist bei herkömmlichen Vorrichtungen relativ gering.

Um die Flexibilität beim Greifen von Behältern zu erhöhen, sind Vorrichtungen zum Transportieren von Behältern bekannt, bei welchen eine einen zu transportierenden Behälter greifende Klammer über einen Greifarm an einem Transportstern gelenkig angebunden ist.

Die US 2011056809 A und die DE 102012112946 A1 zeigen einen Transportstern, an welchem über einen Gelenkarm in einer horizontalen Ebene bewegliche Klammern angebunden sind. Zwar erlaubt dies, die Klammern in der horizontalen Ebene zu verfahren und somit unterschiedliche Teilkreisdurchmesser der Klammern bereitzustellen. Behälter verschiedener Typen können jedoch auch unterschiedliche Höhen aufweisen, welche durch diese Vorrichtung nicht ausgeglichen werden können.

Um einen Höhenversatz auszugleichen, sind Vorrichtungen wie aus der US 2004065525 A bekannt, bei welchen die Höhenposition der Klammern über eine Linearführung veränderbar ist. Eine derartig aufgebaute Vorrichtung ist aufgrund der Vielzahl von Linearführungen jedoch sehr massiv.

Die WO 2005/080013 A1 und CN 107116075 A beschreiben Vorrichtungen zum Umdrehen sich bewegender Flaschen zum Zweck der Reinigung. Die DE 30 09 114 A1 beschreibt eine Vorrichtung nach dem Oberbegriff des Anspruchs 1 zur Übertragung anfangs paarweise gruppierter Behälter.

### Darstellung der Erfindung

Ausgehend von dem bekannten Stand der Technik ist es eine Aufgabe der vorliegenden Erfindung, eine verbesserte Vorrichtung zum Transportieren von Behältern bereitzustellen.

Die Aufgabe wird durch eine Vorrichtung zum Transportieren von Behältern mit den Merkmalen des Anspruchs 1 gelöst. Vorteilhafte Weiterbildungen ergeben sich aus den Unteransprüchen, der Beschreibung und den beigefügten Figuren.

Entsprechend wird eine Vorrichtung zum Transportieren von Behältern, bevorzugt zum Transportieren von Behältern in einer Getränkeabfüllanlage, vorgeschlagen, umfassend einen Transportstern und eine an den Transportstern angebundene Klammer zum Halten eines zu transportierenden Behälters, wobei die Klammer über einen Gelenkarm mit dem Transportstern verbunden ist. Erfindungsgemäß weist der Gelenkarm einer erste Gelenkeinheit zur Anbindung an den Transportstern und eine zweite Gelenkeinheit zur Anbindung an die Klammer auf, wobei die beiden Gelenkeinheiten voneinander beabstandet und voneinander unabhängig bewegbar derart ausgebildet sind, dass die Klammer in ihrer Höhenposition veränderbar ist.

Dadurch, dass der Gelenkarm eine erste Gelenkeinheit zur Anbindung an den Transportstern und eine zweite Gelenkeinheit zur Anbindung an die Klammer aufweist, wobei die beiden Gelenkeinheiten voneinander beabstandet und voneinander unabhängig bewegbar derart ausgebildet sind, dass die Klammer in ihrer Höhenposition veränderbar ist, ist es möglich, auf einfache Weise einen Höhenversatz zwischen einer Aufnahmeposition beziehungsweise Übernahmeposition, in welcher ein Behälter von der Klammer gegriffen werden soll, und einer Behandlungsposition, in welcher der von der Klammer gegriffene Behälter eine Behandlung erfährt, auszugleichen. Fernerhin ist es möglich, den Behälter wiederum auf einem beliebigen Höhenniveau von der Klammer an eine weitere Transporteinheit oder Behandlungseinheit zu übergeben.

Insbesondere, wenn bei einer die Vorrichtung aufweisenden Anlage vorgesehen ist, Behälter verschiedener Behältertypen zu behandeln, insbesondere Flaschen verschiedener Größe mit unterschiedlichem Durchmesser und/oder unterschiedlicher Höhe, ist es nicht erforderlich, zwischen einzelnen Behandlungssternen, beispielsweise einem Rinser zum Spülen von Behältern, einem Füllerkarussell zum Befüllen von Behältern mit einem Füllprodukt, einem Verschließerkarussell zum Verschließen der Behälter jeweils mit einem Behälterverschluss und einem sich daran anschließenden Transportband zum Abtransport der befüllten und verschlossenen Behälter, einen oder mehrere Anhebesterne und/oder Absenktsterne vorzusehen, um bei einem Wechsel des behandelten Behältertyps eine Höhenanpassung zwischen einzelnen Sternen zu ermöglichen.

Die Klammer ist durch ein Schwenken über die beiden Gelenkeinheiten mit unveränderter Ausrichtung in ihrer Höhenposition veränderbar. Unter Ausrichtung wird vorliegend die Position der

Klammer im Raum verstanden, anders ausgedrückt die Stellung der Hauptachsen der Klammer relativ zur Gravitationsrichtung und/oder Rotationsachse des Transportsterns. Dadurch wird erzielt, dass während des Veränderns der Höhenposition der Klammer und mithin der Höhenposition des in der Klammer gehaltenen Behälters der Behälter keine sonstige Lageänderung erfährt, sodass ein Herausschwappen von sich in dem Behälter befindlichen Füllgut, insbesondere Getränk, aus dem Behälter größtenteils vermieden oder gar gänzlich verhindert werden kann.

Die Ausrichtung der Klammer ist senkrecht zur Gravitationsrichtung und/oder senkrecht zur Rotationsachse des Transportsterns orientiert. Die Ausrichtung der Klammer verbleibt dadurch in einer Ebene senkrecht zur Gravitationsrichtung. Mit anderen Worten liegen die Klammerarme der Klammer in der Ebene senkrecht zur Gravitationsrichtung. Ein durch die Klammer gehaltener Behälter ist somit in seiner Ausrichtung ebenfalls unverändert gehalten, wenn die Klammer in ihrer Höhenposition verändert wird. Mithin ist eine Längsachse des in der Klammer gehaltenen Behälters stets parallel zur Gravitationsrichtung ausgerichtet.

Gemäß einer weiteren bevorzugten Ausführungsform sind die beiden Gelenkeinheiten derart ausgebildet, dass die Klammer durch ein Schwenken über die beiden Gelenkeinheiten in einer durch ihre Ausrichtung definierten Ebene, bevorzugt einer Ebene senkrecht zur Gravitationsrichtung und/oder zur Rotationsachse des Transportsterns, bewegbar ist. Dadurch ist es möglich, die Klammer und mithin den in der Klammer gehaltenen Behälter nicht nur in seiner Höhenposition zu verändern, sondern ebenso in der Ebene senkrecht zu seiner Höhenposition zu verschieben beziehungsweise umzupositionieren. Ein vorliegender Achsversatz zwischen zwei benachbarten Sternen, welcher beispielsweise bei einem Transport unterschiedlicher Behältergrößen und/oder Geometrien in einer einzigen Anlage zwischen zwei Sternen nach einem Wechsel des geförderten Behältertyps vorliegt, kann somit ebenfalls in einfacher Weise ausgeglichen werden. Eine mechanisch anspruchsvolle Ausgestaltung von Klammerarmen, die starr an einem Transportstern angeordnet sind und welche Behälter verschiedener Typen stets auf einen Teilkreis mit konstantem Teilkreisdurchmesser aufnehmen, ist dadurch nicht mehr erforderlich. Der Ausgleich des Achsversatzes an der Übergabeposition kann durch ein Schwenken der beiden Gelenkeinheiten in der durch ihre Ausrichtung definierten Ebene in einfacher Weise ausgeglichen werden.

Gemäß einer weiteren bevorzugten Ausführungsform sind die erste Gelenkeinheit und/oder die zweite Gelenkeinheit jeweils um eine erste Achse verschwenkbar, wobei die erste Achse senkrecht zur Gravitationsrichtung und/oder zur Rotationsachse des Transportsterns, und tangential zur Rotationsachse des Transportsterns ausgerichtet ist. Dadurch ist auf einfache Weise ein Ändern der Höhenposition der Klammer möglich.

Gemäß einer weiteren bevorzugten Ausführungsform sind die erste Gelenkeinheit und/oder die zweite Gelenkeinheit jeweils um eine zweite Achse verschwenkbar, wobei die zweite Achse parallel zur Gravitationsrichtung und/oder zur Rotationsachse des Transportsterns ausgerichtet ist. Dadurch ist auf einfache Weise ein Ändern der Position der Klammer in der Ebene senkrecht zu ihrer Höhenposition ermöglicht.

Wenn die erste Gelenkeinheit und/oder die zweite Gelenkeinheit gemäß einer weiteren bevorzugten Ausführungsform jeweils um eine dritte Achse verschwenkbar sind, wobei die dritte Achse senkrecht zur Gravitationsrichtung und/oder zur Rotationsachse und radial zur Rotationsachse des Transportsterns ausgerichtet ist, ist es möglich, die Klammer relativ zu ihrer Anbindung an den Transportstern völlig unabhängig zu bewegen und dennoch stets eine gleichbleibende Ausrichtung der Klammer beizubehalten.

Um einen besonders stabilen und einfachen Aufbau der Vorrichtung zu erhalten, können die erste Gelenkeinheit und/oder die zweite Gelenkeinheit ein Einzelgelenk mit jeweils einer Schwenkachse, bevorzugt mindestens zwei Einzelgelenke, aufweisen.

Gemäß einer weiteren bevorzugten Ausführungsform weisen die erste Gelenkeinheit und/oder die zweite Gelenkeinheit ein Kugelgelenk auf. Dadurch ist es möglich, ein Schwenken um die erste Gelenkeinheit und/oder die zweite Gelenkeinheit über drei Schwenkachsen, mithin der ersten Schwenkachse, der zweiten Schwenkachse und der dritten Schwenkachse mit einem Gelenk, dem Kugelgelenk, bereitzustellen. Eine derart ausgebildete Vorrichtung weist mithin einen sehr kompakten Aufbau auf.

Wenn der Greifarm längenveränderbar, bevorzugt teleskopierbar, ausgebildet ist, ist es zudem möglich, selbst bei einer Änderung des Höhenniveaus der Klammer die Klammer beziehungsweise einen durch die Klammer gehaltenen Behälter auf einem konstanten Teilkreisdurchmesser relativ zur Rotationsachse des Transportsterns zu halten.

Bevorzugt weisen die erste Gelenkeinheit und/oder die zweite Gelenkeinheit eine Antriebseinheit zum Bereitstellen einer Schwenkbewegung auf, wobei eine Antriebseinheit bevorzugt in die erste Gelenkeinheit und/oder die zweite Gelenkeinheit integriert ist. Dadurch wird ein besonders kompakter und einfacher Aufbau der Vorrichtung erzielt. Zudem ist es dadurch möglich, auf einfache Weise jeden Greifarm unabhängig von anderen an den Transportstern angeordneten Greifarmen zu steuern.

Der Transportstern kann ferner zumindest teilweise hohl ausgebildet sein, sodass ein Durchführen von Schläuchen und/oder Kabeln, welche eine Energieversorgung und Steuerungssignale zum Steuern des Greifarms beziehungsweise dessen Verschenkens sowie der Klammer liefern, im Inneren des hohlen Transportsterns angeordnet werden können.

Gemäß einer weiteren bevorzugten Ausführungsform ist die Klammer als aktive Klammer zum aktiven Greifen und Loslassen eines Behälters ausgebildet. Dadurch kann zielgerichtet an jeder Position der Klammer gesteuert werden, ob diese einen Behälter greift, hält oder ihn loslässt. Hierdurch ist die Flexibilität der Vorrichtung nochmals verbessert.

Gemäß einer weiteren bevorzugten Ausführungsform ist die Klammer kraftgesteuert. Mit anderen Worten wird die Anpresskraft, mit welcher die Klammer einen Behälter hält beziehungsweise greift gesteuert/geregelt.

Bevorzugt weist die Klammer zwei Klammerarme zum Greifen eines Behälters, bevorzugt einer Flasche, bevorzugt an ihrem Flaschenhals, an vier Kontaktpunkten auf. Die Klammer ist dabei bevorzugt derart ausgebildet, sodass sie über die zwei Klammerarme Behälter mit verschiedenen Durchmessern greifen kann.

In einer weiteren bevorzugten Ausführungsform ist die Vorrichtung derart ausgebildet, dass ein in der Klammer gehaltener Behälter auf den Kopf schwenkbar ist. Mit anderen Worten kann ein Behälter, der mit seiner Behältermündung nach oben, entgegen der Erdbeschleunigungsrichtung orientiert ist, um im Wesentlichen 180° geschwenkt werden, so dass die Behältermündung in Richtung der Erdbeschleunigungsrichtung, mithin nach unten, orientiert ist. Dadurch kann die Vorrichtung beispielsweise auch in einem Rinser zum Reinigen und/oder Spülen eines Behälters eingesetzt werden.

Bevorzugt ist hierbei die zweite Gelenkeinheit derart ausgebildet, dass die Klammer in zumindest einer Position der Vorrichtung beziehungsweise zumindest einer Orientierung der ersten Gelenkeinheit und der zweiten Gelenkeinheit um eine im Wesentlichen horizontale Achse schwenkbar ist.

Besonders bevorzugt ist hierfür die dritte Achse an der zweiten Gelenkeinheit vorgesehen. Alternativ oder zusätzlich kann auch die erste Gelenkeinheit dazu ausgebildet sein, einen zu haltenden Behälter auf den Kopf zu drehen, oder die erste Gelenkeinheit und die zweite Gelenkeinheit sind derart ausgebildet, dass sie zusammenwirkend ein auf den Kopf drehen ermöglichen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine Draufsicht einer Vorrichtung zum Transportieren von Behältern;
- Figur 2: schematisch eine Seitenansicht eines Teils der Vorrichtung aus Figur 1;
- Figur 3: schematisch eine weitere Seitenansicht der Vorrichtung aus Figur 1;
- Figur 4: schematisch eine weitere Draufsicht der Vorrichtung aus Figur 1;
- Figur 5: schematisch eine Vergrößerungsansicht einer Klammer der Vorrichtung aus Figur 1;
- Figur 6: schematisch eine Seitenansicht einer weiteren Vorrichtung zum Transportieren von Behältern; und
- Figur 7: schematisch eine Draufsicht einer Getränkeabfüllanlage mit einer Vorrichtung zum Transportieren von Behältern.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

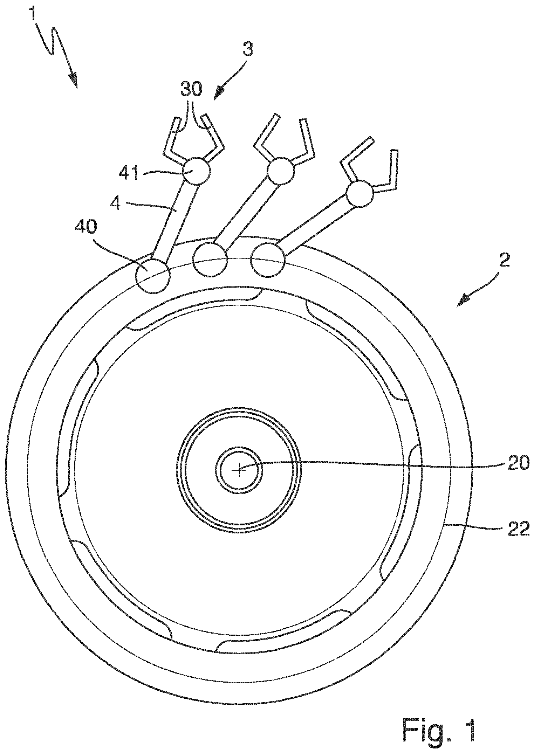

Figur 1 ist schematisch eine Draufsicht einer Vorrichtung 1 zum Transportieren von Behältern zu entnehmen. Die Vorrichtung weist einen Transportstern 2 auf, welcher um eine Rotationsachse 20 herum rotierbar ist. Vorliegend ist die Rotationsachse 20 des Transportsterns 2 parallel zur Gravitationsrichtung ausgerichtet. An dem Transportstern 2 ist eine Vielzahl von Klammern 3 jeweils über einen Gelenkarm 4 angebracht. In Figur 1 sind exemplarisch drei Einheiten aus Klammer 3 und Gelenkarm 4 gezeigt.

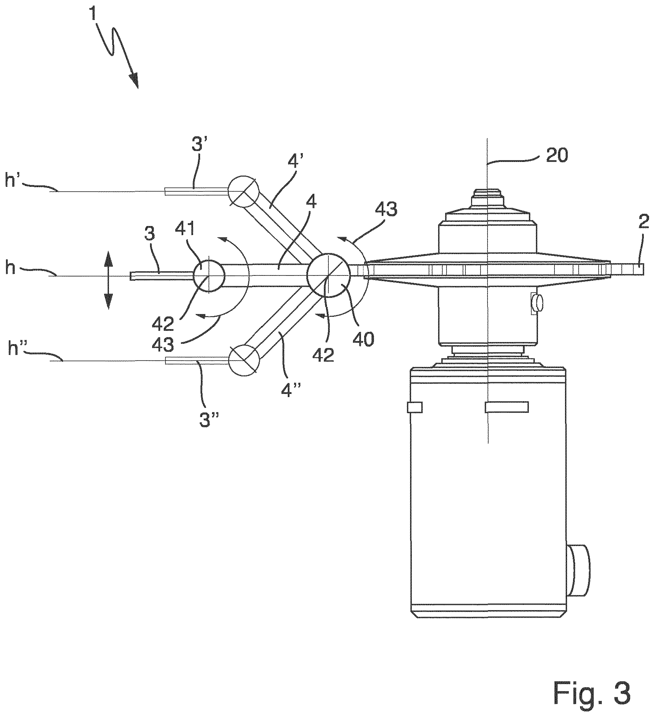

Der Gelenkarm 4 weist eine erste Gelenkeinheit 40 auf, mit welcher er an den Transportstern 2 gelenkig angebunden ist. Ferner weist er eine zweite Gelenkeinheit 41 auf, mit welcher er an die Klammer 3 angebunden ist. Die ersten Gelenkeinheiten 40 sind dabei in Bezug auf die Rotationsachse 20 auf einem Teilkreisdurchmesser 22 radial gleichmäßig verteilt. Die beiden Gelenkeinheiten 40,41 sind voneinander beabstandet und voneinander unabhängig bewegbar, derart sodass die mit dem Gelenkarm 4 verbundenen Klammer 3 in ihrer Höhenposition veränderbar ist, wie im Detail unten zu Figur 3 beschrieben.

Vorliegend sind die erste Gelenkeinheit 40 und die zweite Gelenkeinheit 41 jeweils als Kugelgelenk ausgebildet.

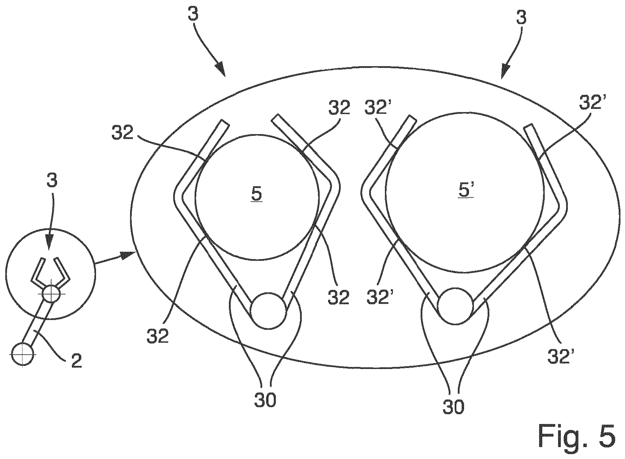

Jede der Klammern 3 weist ein paar aus Klammerarmen 30 auf, mit welchen die Klammer 3 einen zu transportierenden Behälter aktiv greifen kann. Hierzu können die Klammerarme 30 jeder Klammer relativ zueinander voneinander weg und zueinander hin geschwenkt werden, wie im Detail unten mit Bezug auf Figur 5 näher beschrieben.

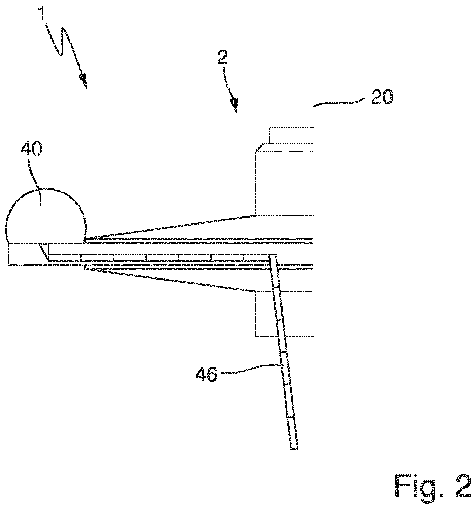

Figur 2 zeigt schematisch eine Seitenansicht eines Teils der Vorrichtung 1 aus Figur 1. Die erste Gelenkeinheit 40 ist an dem Transportstern 2 angeflanscht.

Der Transportstern 2 ist in der vorliegenden Ausführungsform teilweise hohl ausgebildet, sodass eine Kabelzufuhr aus Verbindungsleitungen, wie hier mit dem Bezugszeichen 46 angedeutet, durch das Innere des hohl ausgebildeten Transportsterns 2 zu den Gelenksarmen 4 führbar ist. Die Kabelzufuhr stellt dabei an den Gelenksarm 4 und die Klammer 3 die notwendigen Steuerbefehle sowie eine Energiezufuhr bereit.

Ein für das Ansteuern von Klammer 3 und Greifarm 4 erforderliches Elektronikmodul kann in einem nicht gezeigten Schaltkasten des Transportsterns 2 vorgesehen werden.

Aus Figur 3 ist schematisch eine weitere Seitenansicht der Vorrichtung aus Figur 1 zu entnehmen. Die Klammer 3 befindet sich vorliegend auf einem ersten Höhenniveau beziehungsweise einer ersten Höhenposition h. Die erste Gelenkeinheit 40 und die zweite Gelenkeinheit 41 sind jeweils um eine erste Achse 42 verschwenkbar, welche senkrecht zur Gravitationsrichtung und mithin zur Rotationsachse 20 des Transportsterns 2, und tangential zur Rotationsachse 20 des Transportsterns 2 ausgerichtet ist. Dadurch ist ein Schwenken des Gelenkarm 4 beziehungsweise der Klammer 3 über die jeweiligen ersten Achsen 42 jeweils in einer mittels des Bezugszeichens 43 angedeuteten ersten Schwenkrichtung ermöglicht.

Zum Anheben der Klammer 3 in eine zweite Höhenposition h' ist der Gelenkarm 4 über die erste Achse 42 der ersten Gelenkeinheit 40 in Bezug auf die Darstellung der Figur 3 im Uhrzeigersinn zu schwenken. Um die Ausrichtung der Klammer 3 beibehalten zu können, ist gleichzeitig die Klammer 3 relativ zum Gelenkarm 4 über erste Achse 42 der zweiten Gelenkeinheit 41 entgegen des Uhrzeigersinn zu schwenken. Als Ergebnis liegt die Klammer, wie mittels des Bezugszeichens 3`angedeutet, dann mit unveränderter Ausrichtung auf dem zweiten Höhenniveau beziehungsweise der zweiten Höhenposition h'.

Analog kann auch ein Absenken der Klammer 3 beispielsweise auf ein drittes Höhenniveau h" erfolgen, sodass die Klammer dann in der mittels des Bezugszeichens 3" angedeuteten Position unterhalb der erste Höhenposition h vorliegt.

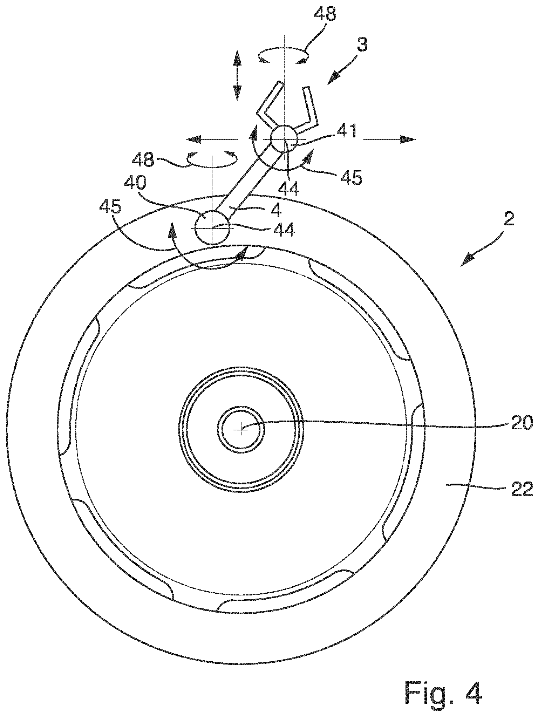

Figur 4 zeigt schematisch eine weitere Draufsicht der Vorrichtung aus Figur 1. Die beiden Gelenkeinheiten 40,41 sind ferner derart ausgebildet, dass die Klammer 3 durch ein Schwenken über die beiden Gelenkeinheiten 40,41 in einer durch ihre Ausrichtung definierten Ebene bewegbar ist, welche vorliegend der Darstellungsebene der Figur 4 entspricht, und senkrecht zur Gravitationsrichtung und mithin zur Rotationsachse 20 des Transportsterns 2 orientiert ist.

Hierzu sind die erste Gelenkeinheit 40 und die zweite Gelenkeinheit 41 jeweils um eine zweite Achse 44 verschwenkbar, wobei die zweite Achse 44 parallel zur Gravitationsrichtung und mithin zur Rotationsachse 20 des Transportsterns 2 ausgerichtet ist. Entsprechend ist ein Schwenken des Greifarms 4 relativ zum Transportstern 2 über die erste Gelenkeinheit 40 sowie ein Schwenken der Klammer 3 relativ zum Greifarm 4 über die zweite Gelenkeinheit 41 jeweils in einer zweiten Schwenkrichtung 45 ermöglicht. Mit anderen Worten kann dadurch die Klammer 3 in der oben beschriebenen Ebene umpositioniert werden.

Fernerhin sind die erste Gelenkeinheit 40 und die zweite Gelenkeinheit 41 optional jeweils um eine dritte Achse 48 verschwenkbar, welche senkrecht zur Gravitationsrichtung und mithin zur Rotationsachse 20 und radial zur Rotationsachse 20 ausgerichtet ist. Mit anderen Worten ist die dritte Achse 48 der ersten Gelenkeinheit 40 und der zweiten Gelenkeinheit 41 jeweils orthogonal zur ersten Achse 42 und orthogonal zur zweiten Achse 44 orientiert.

Durch ein Schwenken der Klammer 3 über die dritte Achse 48 der zweiten Gelenkeinheit 41 ist es möglich, einen darin gehaltenen Behälter auf den Kopf zu drehen. Mit anderen Worten kann ein Behälter, der mit seiner Behältermündung nach oben, entgegen der Erdbeschleunigungsrichtung orientiert ist, um die dritte Achse 48 um im Wesentlichen 180° geschwenkt werden, so dass die Behältermündung dann in Richtung der Erdbeschleunigungsrichtung, mithin nach unten, orientiert ist. Dies ist möglich, ohne dabei einen Achsversatz einer Längsachse des Behälters zu generieren.

Alternativ kann das Schwenken auch über die dritte Achse 48 der ersten Gelenkeinheit 40 erfolgen. Dabei kann zusätzlich ein Versatz der Klammer und somit des darin gehaltenen Behälters mit Bezug auf eine beziehungsweise in einer horizontalen Ebene erzielt werden, um so zugleich beispielsweise direkt von einer Übernahmeposition in eine Behandlungsposition zu schwenken.

Dadurch dass die erste Gelenkeinheit 40 sowie die zweite Gelenkeinheit 41 über jeweils 3 orthogonal zueinander angeordnete Achsen, der erste Achse 42, der zweite Achse 44 und der dritte Achse, schwenkbar sind ist jeweils eine universelle Bedienbarkeit über die erste Gelenkeinheit 40 sowie die zweite Gelenkeinheit 41 bereitgestellt.

Figur 5 zeigt schematisch eine Vergrößerungsansicht einer Klammer 3 der Vorrichtung aus Figur 1, wobei zwei vergrößerte Ansichten der Klammer 3 dargestellt sind. Die in Figur 5 links angeordnete vergrößerte Ansicht der Klammer 3 zeigt die Klammer 3 beim Halten eines Behälters 5 eines ersten Behältertyps, vorliegend einer Flasche bei die Flasche durch die Klammer 3 an ihrem Flaschenhals im sogenannten Neckhandling gegriffen ist. Die Klammer 3 greift den Behälter 5 dabei an 4 Kontaktpunkten 32. Hierdurch ist ein sicheres Greifen des Behälters 5 ermöglicht. Zum Greifen des Behälters 5 werden die Klammerarme 30 zuvor relativ zueinander auseinandergeschwenkt, sodass der Behälter 5 zwischen die Klammerarme 30 bewegt werden kann, ohne mit diesen zu kollidieren. Anschließend werden die Klammerarme 30 relativ zueinander geschwenkt, sodass die Klammerarme 30 an den Kontaktpunkten 32 mit dem Behälter 5 in Kontakt kommen. Damit der Behälter 5 durch die aktiv zusammengefahrenen Klammerarme 30 nicht beschädigt wird und auch nicht aus der Klammer 3 herausrutschen kann, erfolgt das Zusammenfahren der Klammerarme 30 kraftgesteuert. Mithin werden die Klammerarme 30 so lange aufeinander zubewegt, bis eine vorgegebene Haltekraft der Klammer 3 auf den Behälter 5 ausgeübt wird.

Die in Figur 5 rechts angeordnete vergrößerte Ansicht der Klammer 3 zeigt die Klammer 3 beim Halten eines Behälters 5' eines zweiten Behältertyps, welche einen größeren Durchmesser aufweist als der Behälter 5 des ersten Behältertyps. Der Behälter 5' wird analog zu den oben beschriebenen Schritten von der Klammer 3 gegriffen, wobei der Behälter 5' und die Klammerarme 30 aufgrund des anderen Durchmessers wiederum vier Kontaktpunkte 32` aufweisen, welche sich von den vier Kontaktpunkten 32 unterscheiden. Das Greifen des Behälters 5' erfolgt wiederum kraftgesteuert. Dadurch ist sichergestellt, dass sowohl Behälter 5 des ersten Behältertyps als auch Behälter 5` des zweiten Behältertyps mit der gleichen Kraft und somit sicher in der Klammer 3 gehalten werden.

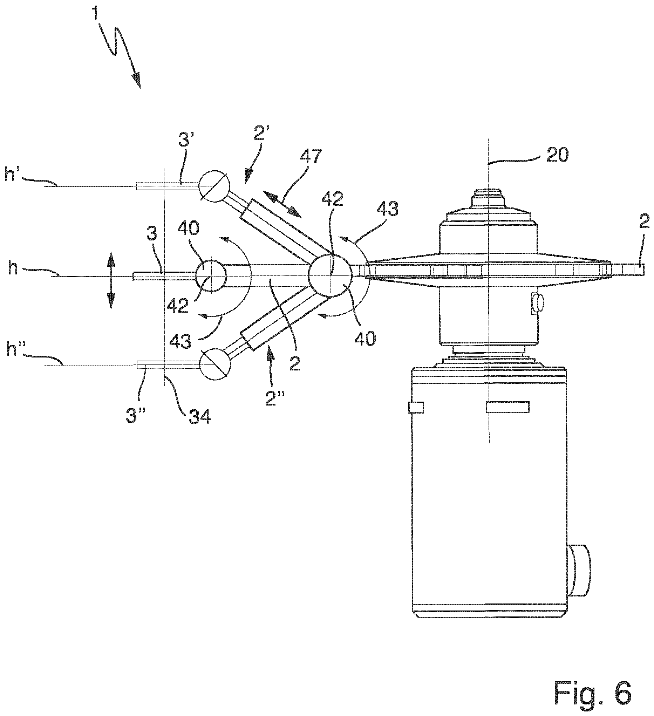

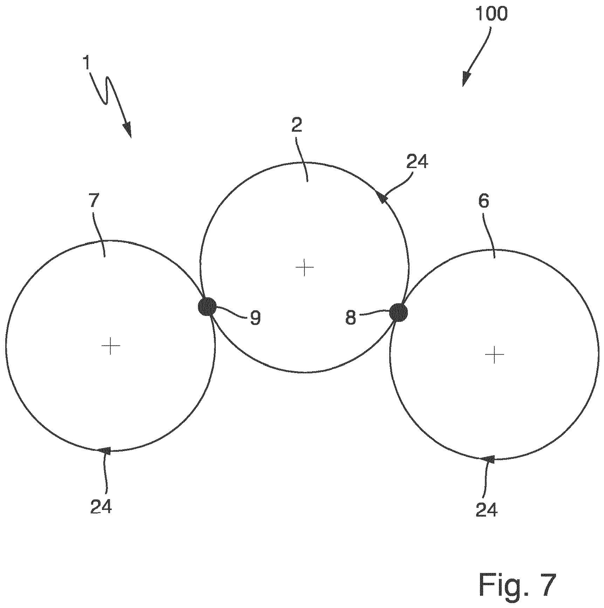

Figur 6 zeigt schematisch eine Seitenansicht einer weiteren Vorrichtung 1 zum Transportieren von Behältern. Die Vorrichtung 1 aus Figur 7 entspricht im Wesentlichen jener aus Figur 3, wobei die Greifarme 4 zudem längenveränderbar, vorliegend teleskopierbar, ausgebildet sind. Entsprechend sind die Klammerarme 4 entlang einer mittels des Bezugszeichens 47 angedeuteten Teleskopierrichtung teleskopierbar. Hierdurch ist es möglich, die Klammer 3 nicht nur in ihrer Höhenposition h, h', h" zu verändern, wie in Bezug auf Figur 3 beschrieben, sondern zusätzlich durch ein entsprechendes Teleskopieren entlang der Teleskopierrichtung 47 derart zu verschieben, dass die Klammer 3 in jeder Höhenposition h, h', h" relativ zur Rotationsachse 20 des Transportsterns 2 auf einem gleich bleibenden Teilkreisdurchmesser 34 positioniert werden kann.

In Figur 7 ist schematisch eine Draufsicht einer Getränkeabfüllanlage 100 mit der Vorrichtung 1 aus Figur 1 gezeigt. Dem Transportstern 2 in Transportrichtung 24 der Behälter gesehen vorgelagert ist ein vorgelagerter Stern 6 angeordnet und dem Transportstern 2 in Transportrichtung 24 der Behälter gesehen nachgelagert ist ein nachgelagerter Stern 7 angeordnet.

Vorliegend sind die Sterne 2, 6, 7 jeweils entsprechend der Vorrichtung 1 aus Figur 1 ausgebildet. Mithin weisen alle Sterne 2, 6, 7 eine Vielzahl von Einheiten aus Klammer 3 und Gelenkarm 4 auf. Alternativ können auch einer oder mehrere der Sterne 2, 6, 7 mit herkömmlichen Klammern versehen sein.

Der Transport von Behältern in Transportrichtung 24 erfolgt dabei wie folgt: Ein durch den vorgelagerten Stern 6 transportierter Behälter wird an einem Übernahmepunkt 8 von dem Transportstern 2 übernommen, von diesem weitertransportiert und an einem Übergabepunkt 9 an den nachgelagerten Stern 7 übergeben. Dabei transportiert eine an dem vorgelagerten Stern 6 über einen Greifarm angebundene Klammer einen Behälter bis zum Übernahmepunkt 8, in welchem eine Klammer 3 des Transportsterns 2 den Behälter greift und die Klammer des vorgelagerten Sterns 6 öffnet. Um ein besonders sanftes Übergeben des Behälters von der Klammer des vorgelagerten Sterns 6 an die Klammer 3 zu erzielen, werden sowohl die Klammer des vorgelagerten Sterns 6 als auch die Klammer 3 des Transportsterns 2 über die jeweiligen Gelenkeinheiten der jeweiligen Greifarme jeweils individuell an einen für jeden Behältertyp vorgegebenen Übernahmepunkt bewegt. Dadurch können ein Achsversatz und ein Höhenversatz am Übernahmepunkt, welche ansonsten beim Transport verschiedener Behältertypen vorliegen würde, ausgeglichen werden, sodass Behältertypen mit verschiedener Geometrie, insbesondere Flaschen mit verschiedenen Flaschenhalsdurchmessern transportiert werden können.

Bevorzugt werden die Klammer des vorgelagerten Sterns 6 als auch die Klammer 3 des Transportsterns 2 am Übernahmepunkt 8 jeweils kurz in genau diesem Punkt gehalten, sodass ein besonders sanftes Übernehmen des Behälters ermöglicht ist.

Analog erfolgt die Übergabe des durch die Klammer 3 transportierten Behälters an den nachgelagerten Stern 7 im Übergabepunkt 9.

Die Höhenpositionen einer dem vorgelagerten Stern 6 zugeordneten Behandlungseinheit zum Behandeln eines Behälters sowie einer dem nachgelagerten Stern 7 zugeordneten weiteren Behandlungseinheit sind dabei relativ zu einer Höhenposition der Klammern auf einen bestimmten Behältertyp abgestimmt. Werden nun in der Getränkeabfüllanlage 100 Behälter eines anderen Behältertyps transportiert und behandelt, so liegt ein Versatz zwischen den in den Klammern gehaltenen Behältern dieses Typs und den Behandlungseinheiten vor. Um diesen Versatz auszugleichen, werden die Klammern wie hinsichtlich Figur 3 und Figur 6 beschrieben in eine andere Höhenposition gebracht, sodass die Behälter des anderen Typs eine zur Behandlung ideale Höhenposition aufweisen.

Fernerhin ist es durch Ändern der Höhenposition der Klammern möglich, Behälter verschiedener Größe, insbesondere Höhe, beispielsweise auf ein dem nachgelagerten Stern 7 nachgelagerten Transportband (nicht gezeigt), welches eine feste Höhenposition aufweist, abzusetzen.

### Bezugszeichenliste

- 1: Vorrichtung
- 2: Transportstern
- 20: Rotationsachse
- 22: Teilkreisdurchmesser
- 24: Transportrichtung
- 3: Klammer
- 30: Klammerarme
- 32, 32': Kontaktpunkt
- 34: Teilkreisdurchmesser
- 4: Gelenkarm
- 40: Erste Gelenkeinheit
- 41: Zweite Gelenkeinheit
- 42: Erste Achse
- 43: Erste Schwenkrichtung
- 44: Zweite Achse
- 45: Zweite Schwenkrichtung
- 46: Verbindungsleitung
- 47: Teleskopierrichtung
- 48: Dritte Achse
- h, h', h": Höhenposition
- 5, 5': Behälter
- 6: Vorgelagerter Stern
- 7: Nachgelagerter Stern
- 8: Übernahmepunkt
- 9: Übergabepunkt

- 100: Getränkeabfüllanlage

## Patentansprüche

1. Vorrichtung (1) zum Transportieren von Behältern (5, 5`), bevorzugt zum Transportieren von Behältern (5, 5') in einer Getränkeabfüllanlage (100), umfassend einen Transportstern (2) und eine an den Transportstern (2) angebundene Klammer (3) zum Halten eines zu transportierenden Behälters (5, 5`), wobei die Klammer (3) über einen Gelenkarm (4) mit dem Transportstern (2) verbunden ist, und
der Gelenkarm (4) eine erste Gelenkeinheit (40) zur Anbindung an den Transportstern (2) und eine zweite Gelenkeinheit (41) zur Anbindung an die Klammer (3) aufweist, wobei die beiden Gelenkeinheiten (40, 41) voneinander beabstandet und voneinander unabhängig bewegbar derart ausgebildet sind, dass die Klammer (3) in ihrer Höhenposition (h, h', h") veränderbar ist, wobei
die Klammer (3) durch ein Schwenken über die beiden Gelenkeinheiten (40, 41) mit unveränderter Ausrichtung in ihrer Höhenposition (h, h', h") veränderbar ist,
**dadurch gekennzeichnet, dass**
die Ausrichtung der Klammer (3) senkrecht zur Gravitationsrichtung und/oder senkrecht zur Rotationsachse (20) des Transportsterns (2) orientiert ist.

2. Vorrichtung (1) gemäß einem der vorstehenden Ansprüche, **dadurch gekennzeichnet, dass** die beiden Gelenkeinheiten (40, 41) derart ausgebildet sind, dass die Klammer (3) durch ein Schwenken über die beiden Gelenkeinheiten (40, 41) in einer durch ihre Ausrichtung definierten Ebene, bevorzugt einer Ebene senkrecht zur Gravitationsrichtung und/oder zur Rotationsachse (20) des Transportsterns (2), bewegbar ist.

3. Vorrichtung (1) gemäß einem der vorstehenden Ansprüche, **dadurch gekennzeichnet, dass** die erste Gelenkeinheit (40) und/oder die zweite Gelenkeinheit (41) jeweils um eine erste Achse (42) verschwenkbar sind, wobei die erste Achse (42) senkrecht zur Gravitationsrichtung und/oder zur Rotationsachse (20) des Transportsterns (2), und tangential zur Rotationsachse (20) des Transportsterns (2) ausgerichtet ist.

4. Vorrichtung (1) gemäß einem der vorstehenden Ansprüche, **dadurch gekennzeichnet, dass** die erste Gelenkeinheit (40) und/oder die zweite Gelenkeinheit (41) jeweils um eine zweite Achse (44) verschwenkbar sind, wobei die zweite Achse (44) parallel zur Gravitationsrichtung und/oder zur Rotationsachse (20) des Transportsterns (2) ausgerichtet ist.

5. Vorrichtung (1) gemäß einem der vorstehenden Ansprüche, **dadurch gekennzeichnet, dass** die erste Gelenkeinheit (40) und/oder die zweite Gelenkeinheit (41) jeweils um eine dritte Achse verschwenkbar sind, wobei die dritte Achse senkrecht zur Gravitationsrichtung und/oder zur Rotationsachse (20) und radial zur Rotationsachse (20) des Transportsterns (2) ausgerichtet ist.

6. Vorrichtung (1) gemäß einer der vorstehenden Ansprüche, **dadurch gekennzeichnet, dass** die erste Gelenkeinheit (40) und/oder die zweite Gelenkeinheit (41) ein Einzelgelenk mit jeweils einer Schwenkachse, bevorzugt mindestens zwei Einzelgelenke, aufweisen.

7. Vorrichtung (1) gemäß einer der vorstehenden Ansprüche, **dadurch gekennzeichnet, dass** die erste Gelenkeinheit (40) und/oder die zweite Gelenkeinheit (41) ein Kugelgelenk aufweisen.

8. Vorrichtung (1) gemäß einem der vorstehenden Ansprüche, **dadurch gekennzeichnet, dass** der Greifarm (4) längenveränderbar, bevorzugt teleskopierbar, ausgebildet ist.

9. Vorrichtung (1) gemäß einem der vorstehenden Ansprüche, **dadurch gekennzeichnet, dass** die erste Gelenkeinheit (40) und/oder die zweite Gelenkeinheit (41) eine Antriebseinheit zum Bereitstellen einer Schwenkbewegung aufweisen, wobei eine Antriebseinheit bevorzugt in die erste Gelenkeinheit (40) und/oder die zweite Gelenkeinheit (41) integriert ist.

10. Vorrichtung (1) gemäß einem der vorstehenden Ansprüche, **dadurch gekennzeichnet, dass** die Klammer (3) als aktive Klammer (3) zum aktiven Greifen und Loslassen eines Behälters (5, 5') ausgebildet ist.

11. Vorrichtung (1) gemäß Anspruch 10, **dadurch gekennzeichnet dass** die Klammer (3) kraftgesteuert ist.

## Claims

1. An apparatus (1) for transporting containers (5, 5'), preferably for transporting containers (5, 5`) in a beverage filling system (100), comprising a transport starwheel (2) and a clamp (3), connected to the transport starwheel (2), for holding a container (5, 5`) to be transported, wherein the clamp (3) is connected to the transport starwheel (2) via an articulated arm (4), and
the articulated arm (4) has a first articulated unit (40) for connection to the transport starwheel (2) and a second articulated unit (41) for connection to the clamp (3), wherein the two articulated units (40, 41) are spaced apart from one another and are configured to be movable independently of one another in such a way that the height position (h, h`, h") of the clamp (3) can be changed, wherein
the height position (h, h`, h") of the clamp (3) can be changed by swiveling said clamp via the two articulated units (40, 41) without changing the orientation,
**characterized in that**
the orientation of the clamp (3) is perpendicular to the direction of gravity and/or perpendicular to the axis of rotation (20) of the transport starwheel (2).

2. The apparatus (1) according to any of the preceding claims, **characterized in that** the two articulated units (40, 41) are configured such that the clamp (3) can be moved by swiveling said clamp via the two articulated units (40, 41) in a plane defined by its orientation, preferably a plane perpendicular to the direction of gravity and/or to the axis of rotation (20) of the transport starwheel (2).

3. The apparatus (1) according to any of the preceding claims, **characterized in that** the first articulated unit (40) and/or the second articulated unit (41) can each be swiveled about a first axis (42), wherein the first axis (42) is oriented perpendicularly to the direction of gravity and/or to the axis of rotation (20) of the transport starwheel (2) and tangentially to the axis of rotation (20) of the transport starwheel (2).

4. The apparatus (1) according to any of the preceding claims, **characterized in that** the first articulated unit (40) and/or the second articulated unit (41) can each be swiveled about a second axis (44), wherein the second axis (44) is oriented in parallel with the direction of gravity and/or with the axis of rotation (20) of the transport starwheel (2).

5. The apparatus (1) according to any of the preceding claims, **characterized in that** the first articulated unit (40) and/or the second articulated unit (41) can each be swiveled about a third axis, wherein the third axis is oriented perpendicularly to the direction of gravity and/or to the axis of rotation (20) and radially with respect to the axis of rotation (20) of the transport starwheel (2).

6. The apparatus (1) according to any of the preceding claims, **characterized in that** the first articulated unit (40) and/or the second articulated unit (41) have a single joint, each with a swivel axis, and preferably at least two single joints.

7. The apparatus (1) according to any of the preceding claims, **characterized in that** the first articulated unit (40) and/or the second articulated unit (41) has/have a ball joint.

8. The apparatus (1) according to any of the preceding claims, **characterized in that** the gripper arm (4) is configured to be variable in length, preferably telescopic.

9. The apparatus (1) according to any of the preceding claims, **characterized in that** the first articulated unit (40) and/or the second articulated unit (41) has/have a drive unit for providing a swiveling movement, wherein a drive unit is preferably integrated into the first articulated unit (40) and/or the second articulated unit (41).

10. The apparatus (1) according to any of the preceding claims, **characterized in that** the clamp (3) is configured as an active clamp (3) for actively gripping and releasing a container (5, 5').

11. The apparatus (1) according to claim 10, **characterized in that** the clamp (3) is force-controlled.

## Revendications

1. Dispositif (1) permettant le transport de récipients (5, 5'), de préférence le transport de récipients (5, 5') dans une installation de remplissage de boissons (100), comprenant une étoile de transport (2) et une pince (3) reliée à l'étoile de transport (2) permettant le maintien d'un récipient (5, 5') à transporter, dans lequel la pince (3) est reliée à l'étoile de transport (2) par l'intermédiaire d'un bras articulé (4), et
le bras articulé (4) présente une première unité d'articulation (40) pour la liaison à l'étoile de transport (2) et une seconde unité d'articulation (41) pour la liaison à la pince (3), dans lequel les deux unités d'articulation (40, 41) sont conçues à distance l'une de l'autre et peuvent être déplacées indépendamment l'une de l'autre de telle sorte que la pince (3) peut être modifiée dans sa position en hauteur (h, h', h"), dans lequel
la pince (3) peut être modifiée dans sa position en hauteur (h, h', h") par un pivotement par l'intermédiaire des deux unités d'articulation (40, 41) avec une orientation inchangée,
**caractérisé en ce que**
l'orientation de la pince (3) est orientée perpendiculairement à la direction de gravitation et/ou perpendiculairement à l'axe de rotation (20) de l'étoile de transport (2).

2. Dispositif (1) selon l'une des revendications précédentes, **caractérisé en ce que** les deux unités d'articulation (40, 41) sont conçues de telle sorte que la pince (3) peut être déplacée par un pivotement par l'intermédiaire des deux unités d'articulation (40, 41) dans un plan défini par son orientation, de préférence un plan perpendiculaire à la direction de gravitation et/ou à l'axe de rotation (20) de l'étoile de transport (2).

3. Dispositif (1) selon l'une des revendications précédentes, **caractérisé en ce que** la première unité d'articulation (40) et/ou la seconde unité d'articulation (41) peuvent respectivement pivoter autour d'un premier axe (42), dans lequel le premier axe (42) est orienté perpendiculairement à la direction de gravitation et/ou à l'axe de rotation (20) de l'étoile de transport (2), et tangentiellement à l'axe de rotation (20) de l'étoile de transport (2).

4. Dispositif (1) selon l'une des revendications précédentes, **caractérisé en ce que** la première unité d'articulation (40) et/ou la seconde unité d'articulation (41) peuvent respectivement pivoter autour d'un deuxième axe (44), dans lequel le deuxième axe (44) est orienté parallèlement à la direction de gravitation et/ou à l'axe de rotation (20) de l'étoile de transport (2).

5. Dispositif (1) selon l'une des revendications précédentes, **caractérisé en ce que** la première unité d'articulation (40) et/ou la seconde unité d'articulation (41) peuvent respectivement pivoter autour d'un troisième axe, dans lequel le troisième axe est orienté perpendiculairement à la direction de gravitation et/ou à l'axe de rotation (20) et radialement à l'axe de rotation (20) de l'étoile de transport (2).

6. Dispositif (1) selon l'une des revendications précédentes, **caractérisé en ce que** la première unité d'articulation (40) et/ou la seconde unité d'articulation (41) présentent une articulation individuelle comportant respectivement un axe de pivotement, de préférence au moins deux articulations individuelles.

7. Dispositif (1) selon l'une des revendications précédentes, **caractérisé en ce que** la première unité d'articulation (40) et/ou la seconde unité d'articulation (41) présentent une articulation à rotule.

8. Dispositif (1) selon l'une des revendications précédentes, **caractérisé en ce que** le bras de préhension (4) est conçu de manière à pouvoir être modifié en longueur, de préférence de manière télescopique.

9. Dispositif (1) selon l'une des revendications précédentes, **caractérisé en ce que** la première unité d'articulation (40) et/ou la seconde unité d'articulation (41) présentent une unité d'entraînement pour la fourniture d'un mouvement de pivotement, dans lequel une unité d'entraînement est de préférence intégrée dans la première unité d'articulation (40) et/ou la seconde unité d'articulation (41).

10. Dispositif (1) selon l'une des revendications précédentes, **caractérisé en ce que** la pince (3) est conçue comme une pince active (3) pour la prise et la relâche actives d'un récipient (5, 5').

11. Dispositif (1) selon la revendication 10, **caractérisé en ce que** la pince (3) est commandée par la force.
